# EUROPEAN PATENT APPLICATION

(11) **EP 3 597 960 A1**
(43) Date of publication of application: **22.01.2020**
(21) Application number: 18202714.4
(22) Date of filing: 25.10.2018
(51) Int. Cl.: F16F 15/133

(54) **DUAL-MASS FLYWHEEL**

(71) Applicant: SIEVA d.o.o., PE Spodnja Idrija, 5290 Sempeter Pri Gorici (SI); Cimos D.D., 6000 Koper (SI)
(72) Inventor: Bertoncelj, Marko, 6000 Koper (SI); Pregelj, Borut, 5272 Podnanos (SI); Opara, Tomaz, 6210 Sezana (SI); Cafuta, Gasper, 1370 Logatec (SI)
(74) Representative: Cabinet BARRE LAFORGUE & associés

(57) **Abstract**

The invention relates to a dual-mass flywheel comprising:
- a first mass (21),
- a second mass (22),
- a damping device (43) comprising:
∘ a spring device rotationally coupled to the second mass (22) and having at least one surface, named bearing surface (48), facing a lip (24) of the first mass (21),
∘ a roller (45) for each bearing surface (48) of the spring device adapted to roll along the bearing surface (48) associated with this roller (45),

characterised in that the lip (24) comprises, for each roller (45), a surface, named cam surface (46), adapted to allow the roller (45) associated with this cam surface (46) to roll along this cam surface (46) so as to radially compress the spring device upon angular displacement of the first mass (21) with respect to the second mass (22).

## Description

The invention relates to a dual-mass flywheel.

A dual-mass flywheel is a torque-transmitting device which can be used in particular in an automobile between a drive shaft (in particular a crankshaft of an internal combustion engine) and a clutch system of this automobile. Such a dual-mass flywheel enables the transmission of rotation acyclisms of the drive shaft to the clutch system to be prevented, and thus enables the noise and vibrations of the vehicle which may result from such acyclisms to be reduced.

In particular, a known dual-mass flywheel comprises a first mass and a second mass which are coaxial along a main axis and can move in rotation with respect to each other around the main axis. The first mass is adapted to be rotationally driven by the shaft of the engine. Furthermore, a frictional disc of the clutch system of the automobile generally co-operates with the second mass so as to transmit the engine torque to the clutch system. The dual-mass flywheel likewise comprises a damping device placed between the first mass and the second mass and rotationally coupling these two masses so as to transmit the engine torque therebetween whilst allowing some variations in their relative angular positions. The damping device allows the torque variations to be filtered and thus allows the transmission of rotation acyclisms from the first mass to the second mass to be prevented. More particularly, the damping device comprises a spring device adapted to be compressed when a moment arises between the first mass and the second mass.

FR3008152 describes a damping device comprising two elastic strips mounted for conjoint rotation on the first mass and symmetrical to each other with respect to the main axis. Each elastic strip has a cam surface which is arranged to co-operate with a roller which is mounted so as to be rotatable on a cylindrical rod fixed to the second mass. Each roller is kept in abutment against the cam surface of the elastic strip with which it co-operates so as to be able to roll against this cam surface upon relative movement between the first mass and the second mass. The rolling of a roller against the cam surface enables a bending stress to be exerted on the elastic strip of this cam surface so as to transmit the torque from the first mass to the second mass, absorbing the acyclisms of the crankshaft. This damping device means that the dual-mass flywheel is complex and relatively slow to produce. Such a dual-mass flywheel is also expensive, relatively heavy and not sustainable.

The invention aims to overcome these disadvantages.

The invention thus aims to propose a dual-mass flywheel comprising a damping device enabling the dual-mass flywheel to be produced simply and quickly.

The invention likewise aims to propose a dual-mass flywheel which is not expensive, lighter and sustainable.

The invention likewise aims to propose a dual-mass flywheel allowing a large amount of angular displacement between the first mass and the second mass.

The invention thus relates to a dual-mass flywheel comprising:
- a first mass comprising a plate from which a lip protrudes so as to delimit a cavity with the plate of the first mass,
- a second mass comprising a plate facing the plate of the first mass so as to cover the cavity of the first mass, the second mass being mounted so as to rotate with respect to the first mass about a main axis secant with the plate of the first mass and the plate of the second mass,
- a damping device arranged in said cavity and comprising:
   ∘ a spring device rotationally coupled with the second mass and having at least one surface, named bearing surface, about the main axis and facing the lip of the first mass, the spring device being able to be radially compressed so as to bring each bearing surface closer to the main axis,
   ∘ a roller for each bearing surface of the spring device, each roller being arranged against a bearing surface so as to be able to roll along this bearing surface upon angular displacement of the first mass with respect to the second mass about the main axis,
characterised in that each roller is arranged against a bearing surface and a surface, named cam surface, formed by the lip of the first mass, each cam surface being arranged to allow the roller arranged against this cam surface, upon angular displacement of the first mass with respect to the second mass about the main axis, to:
- roll along this cam surface, and
- be displaced towards the main axis so as to radially compress the spring device.

A dual-mass flywheel in accordance with the invention thus comprises a damping device adapted to transmit a torque between the first mass and the second mass via each roller and the spring device.

Furthermore, in such a dual-mass flywheel, each roller is free from the first mass and from the second mass. In particular, each roller is placed between a bearing surface of the spring device and a cam surface of the lip of the first mass, without being fixed to the first mass and to the second mass, so as to be able to roll along the bearing surface and the cam surface. The roller is thus held radially by the cam surface and the bearing surface.

The use of free rollers facilitates the production of a dual-mass flywheel whilst enabling good damping performance with respect to acyclisms of the first mass, allowing a large angular displacement of the first mass with respect to the second mass.

A ring gear is generally mounted on the first mass so as to couple the first mass to the starter motor.

The plate of the first mass and the plate of the second mass each preferably have a disc shape perpendicular to the main axis and centred on this axis. The plate of the first mass is thus in parallel with the plate of the second mass.

Advantageously, in order for the second mass to be mounted so as to rotate about the main axis with respect to the first mass, the second mass comprises a hub mounted on a hub of the first mass by a pivot joint. In particular, the hub of the second mass is inserted into the hub of the first mass.

The angular displacement of the first mass with respect to the second mass is defined from a position, named rest position, in which each roller is arranged at a maximum distance from the main axis. In particular, in the rest position, each roller is placed in the centre of a cam surface and in the centre of the bearing surface. Each cam surface is symmetrical with respect to a radial plane passing through the centre of the cam surface. Similarly, each bearing surface is symmetrical with respect to this same radial plane which likewise passes through the centre of the bearing surface. Each cam surface has two longitudinal ends and the distance between the cam surface and the main axis decreases from the centre of the cam surface towards its longitudinal ends. Similarly, the distance between the cam surface and the bearing surface decreases from the centre of the cam surface towards its longitudinal ends.

The length of the cam surface and the length of the bearing surface are defined as a function of the desired angular displacement. Preferably, an angular displacement is selected to be between -45° and +45° from said rest position, more particularly between -26° and +26° from said rest position.

Advantageously, in any displacement position, the tangent to the bearing surface at a contact point of the bearing surface with a roller is in parallel with the tangent to the cam surface at a contact point of the cam surface with this same roller.

Thus, each roller can roll without sliding along the cam surface and the bearing surface, between which this roller is arranged.

In some advantageous embodiments in accordance with the invention, the spring device comprises at least one flexible strip forming at least one bearing surface of the spring device.

The use of flexible strips enables a spring device to be obtained which has a simple structure which is inexpensive to produce.

In some advantageous embodiments in accordance with the invention, the dual-mass flywheel comprises at least two stops enabling the displacement of the rollers about the main axis on the cam surface to be limited between two positions defined by these stops.

In some embodiments and in accordance with the invention, each stop is a piece connected to a mass of the dual-mass flywheel. Nevertheless, preferably each stop is integrated in a mass of the dual-mass flywheel. Some stops can be integrated in the first mass and other stops can be integrated in the second mass.

In some advantageous embodiments in accordance with the invention, the second mass comprises at least one pin extending into the cavity from the plate of the second mass. Furthermore, each flexible strip is held to at least one pin so as to prevent rotation of each strip about the main axis with respect to the second mass and to allow radial displacement of each strip when the spring device is radially compressed.

Preferably, the second mass comprises a plurality of pins arranged in a circle about the main axis. Furthermore, each pin is in the shape of a cylinder of revolution. Each strip comprises at least two hook portions extending radially in the cavity and each passing around a pin between this pin and the main axis. Each hook portion radially extends into the cavity so as to be able to slide towards the main axis upon angular displacement of the first mass with respect to the second mass. Furthermore, each flexible strip likewise has, between each hook portion, a portion connecting two hook portions and extending between the lip of the first mass and a theoretical straight line passing through these two pins. The hook portions of each strip enable this strip to be rotationally coupled with the second mass. Furthermore, such a spring device does not require any tool in order to be mounted on the second mass.

In some advantageous embodiments in accordance with the invention, the spring device comprises:
- a first closed flexible strip forming each bearing surface of the spring device between each hook portion of this first strip,
- a second closed flexible strip arranged between the first strip and the main axis, this second strip having, between each hook portion of this second strip, a portion, named spring portion, for each portion forming a bearing surface of the first strip, this spring portion bearing against a portion, named bearing portion, of the first strip forming a bearing surface and being adapted to exert, on this bearing portion, a radial force towards the lip of the first mass so as to keep the bearing surface formed by this bearing portion of the first strip against the roller co-operating with this bearing surface.

The use of only two strips to form the spring device enables the spring device to be quickly mounted on the second mass.

As a variant, in some other advantageous embodiments in accordance with the invention, the spring device comprises a plurality of identical flexible strips arranged around the main axis and each having:
- a portion, named bearing portion, forming a bearing surface of the spring device between a first hook portion and a second hook portion of this strip, and
- a portion, named spring portion, between the second hook portion and a third hook portion of this strip, the spring portion bearing against a surface of the bearing portion of an adjacent strip opposite the bearing surface of this adjacent strip.

Therefore, each strip has a spring portion embedded in the bearing portion of a strip directly adjacent to this strip. Such a spring device is simple and inexpensive to produce because the strips of the spring device are identical.

In some advantageous embodiments in accordance with the invention, the lip of the first mass comprises at least one groove having a base forming at least one cam surface. In particular, the lip of the first mass has an inner lateral wall delimiting the cavity. This inner lateral wall forms each groove.

In some advantageous embodiments, the inner lateral wall of the lip of the first mass comprises a single groove forming each cam surface. Such a groove enables the production of the first mass to be facilitated.

In some advantageous embodiments in accordance with the invention, each groove axially keeps the roller in place against the cam surface formed by this groove.

In particular, each groove has a depth shallower than the radius of each roller. Furthermore, the groove has a width at least substantially equal to the height of each roller. In order to reduce the friction between the rollers and each groove, grease can be spread in each groove.

In some advantageous embodiments in accordance with the invention, each flexible strip is metallic. In particular, each strip is formed of a material, which can be selected from different spring steels (this selection being dependant on the desired hardness for the spring device.).

The flexibility of the strips is selected as a function of desired damping performances with respect to acyclisms.

In some advantageous embodiments in accordance with the invention, the first mass comprises at least one friction element in contact with a friction element of the second mass.

The friction elements enable the transmission of torque between the first mass and the second mass to be improved. The friction elements are rings arranged, one in an annular recess provided in the lip of the first mass and the other in a peripheral annular recess in the second mass.

The invention likewise relates to a dual-mass flywheel characterised, in combination or not, by all or some of the features mentioned above or below. However they are formally presented, unless explicitly stated otherwise, the different features mentioned above or below should not be considered to be closely or inextricably linked with each other, the invention being able to relate to only one of these structural or functional features, or only some of these structural or functional features, or only part of one of these structural or functional features, or even any group, combination or juxtaposition of all or some of these structural or functional features.

Other aims, features and advantages of the invention will become apparent upon reading the following description given by way of non-limiting example of some possible embodiments thereof, and which makes reference to the attached figures in which:
- figure 1 is a schematic front view of a dual-mass flywheel in accordance with a first embodiment of the invention,
- figure 2 is a schematic, transverse cross-sectional view of the dual-mass flywheel of figure 1,
- figure 3 is a schematic, axial cross-sectional view of the dual-mass flywheel of figure 1,
- figure 4 is a schematic, perspective and exploded view of the dual-mass flywheel of figure 1,
- figure 5 is a schematic front view of a dual-mass flywheel in accordance with a second embodiment of the invention,
- figure 6 is a schematic, transverse cross-sectional view of the dual-mass flywheel of figure 5,
- figure 7 is a schematic, axial cross-sectional view of the dual-mass flywheel of figure 5,
- figure 8 is a schematic, perspective and exploded view of the dual-mass flywheel of figure 5,
- figures 9 to 11 are schematic, cross-sectional detailed views of a dual-mass flywheel in different angular positions of the second mass with respect to the first mass.

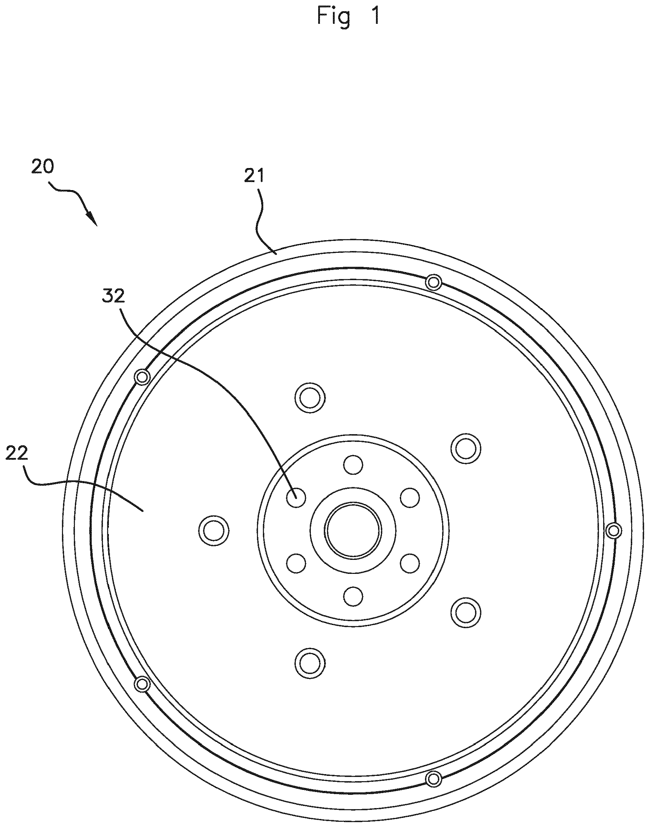

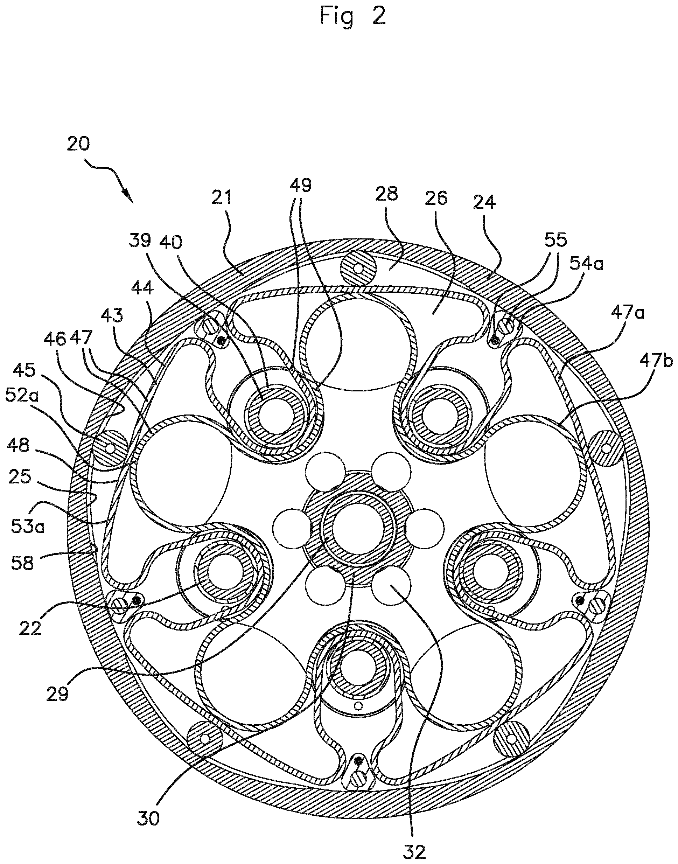

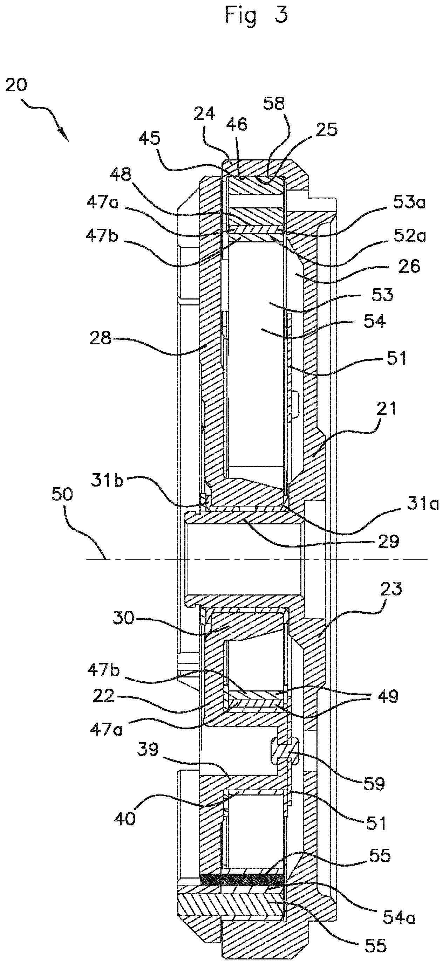

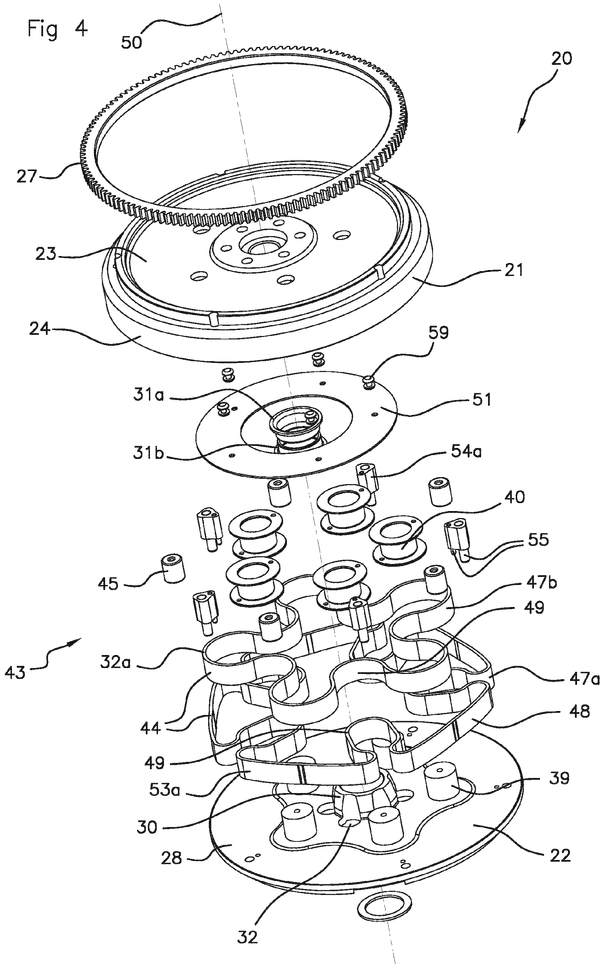

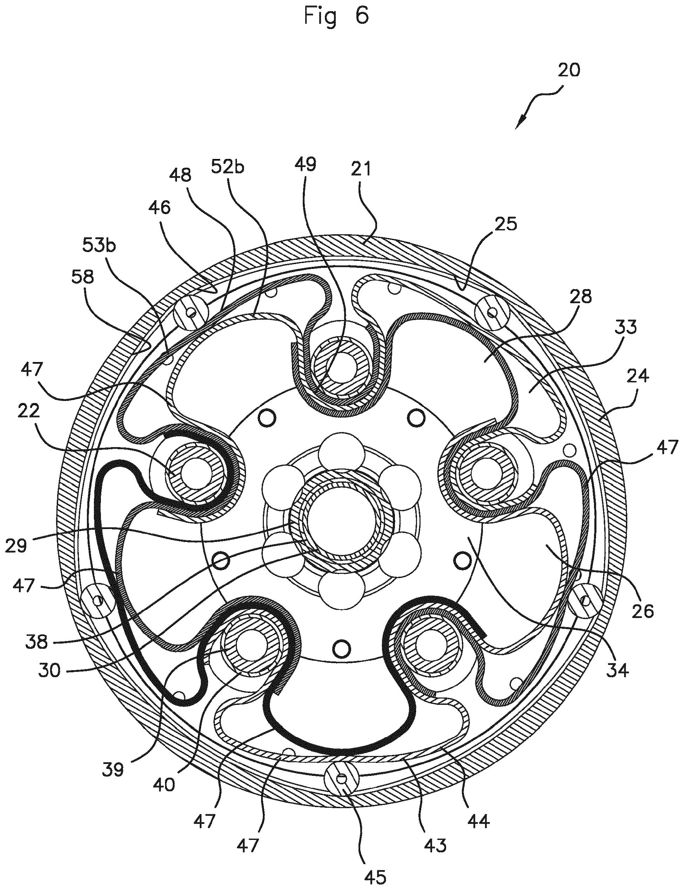

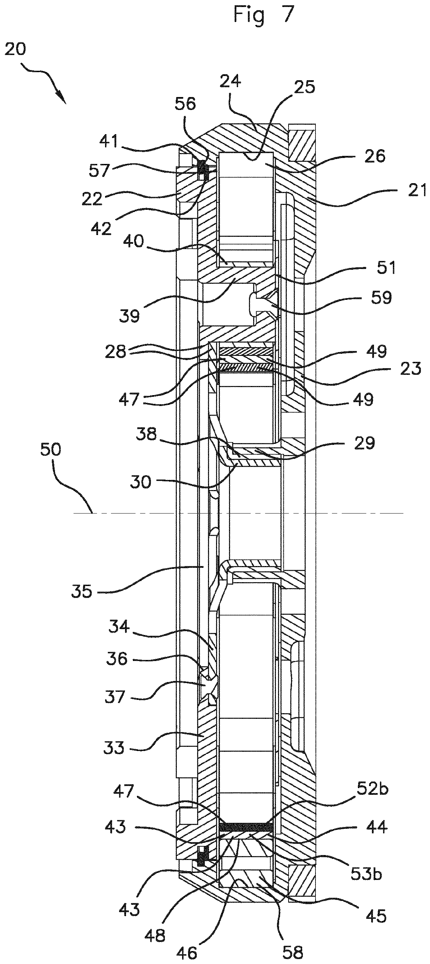

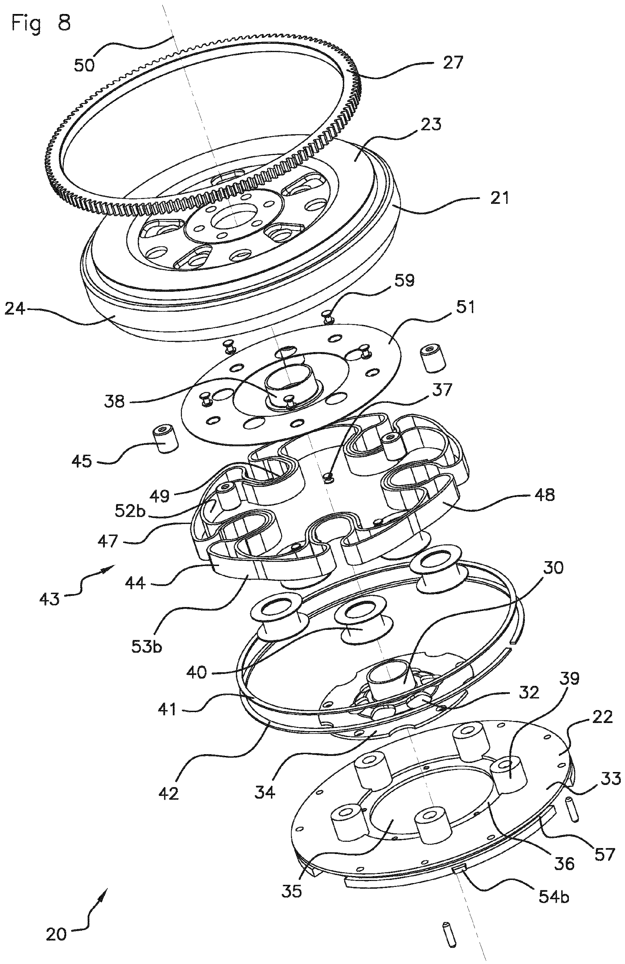

A dual-mass flywheel 20 shown in accordance with two embodiments in figures 1 to 4 and 5 to 8 comprises a first mass 21 and a second mass 22 in parallel with each other and centred on a main axis 50. The second mass 22 is mounted so as to rotate about the main axis 50 on the first mass 21.

The first mass 21 comprises a disc-shaped plate 23 from which a lip 24 protrudes on a theoretical closed curve so as to delimit a cavity 26 with the plate 23 of the first mass 21. In particular, the lip 24 has an inner lateral wall 25 delimiting the cavity 26.

A ring gear 27 coaxial with the main axis 50 with respect to the first mass 21 is mounted on this first mass 21 so as to couple the first mass 21 to a starter motor of a combustion engine of an automobile.

The second mass 22 comprises a disc-shaped plate 28 coaxial with a main axis 50 with the plate 23 of the first mass 21. The plate 28 of the second mass is mounted so as to rotate with respect to the plate 23 of the first mass 21 about the main axis 50. The plate 28 of the second mass 22 covers the cavity 26 of the first mass 21. The plate 23 of the first mass 21 and the plate 28 of the second mass 22 are perpendicular to the main axis 50. The plate 23 of the first mass 21 is thus in parallel with the plate 28 of the second mass 22.

In order for the second mass 22 to be mounted so as to rotate about the main axis 50 with respect to the first mass 21, the second mass 22 comprises a hub 30 mounted on a hub 29 of the first mass 21 by a pivot joint. In particular, the hub 30 of the second mass 22 is inserted into the hub 29 of the first mass 21.

In the embodiment shown in figures 1 to 4, the plate 28 of the second mass 22 is formed of a single piece. This piece likewise forms a hub 30 of the second mass 22 in which a hub in the shape of a cylinder of revolution of the first mass 21 is inserted. The hub 29 of the first mass 21 and the hub 30 of the second mass 22 have a longitudinal through-going bore. In particular, two bushings 31a, 31b are arranged between the hub 29 of the first mass 21 and the hub 30 of the second mass 22. A first bushing 31a is inserted in the hub 30 of the second mass 22 through a first longitudinal opening of the through-going bore in the hub 30 of the second mass. The second bushing 31b is inserted in the hub 30 of the second mass 22 through a second longitudinal opening of the through-going bore in the hub 30 opposite the first opening. These bushings 31a, 31b enable the first mass 21 to be mounted on the second mass 22. These bushings 31a, 31b also permit avoiding friction between the hub 29 of the first mass 21 and the hub 30 of the second mass 22. Furthermore, the plate 28 of the second mass 22 comprises openings 32 arranged in a circle around the hub 29 of the first mass 22. These openings 32 permit mounting the dual mass flywheel on a crankshaft with screws.

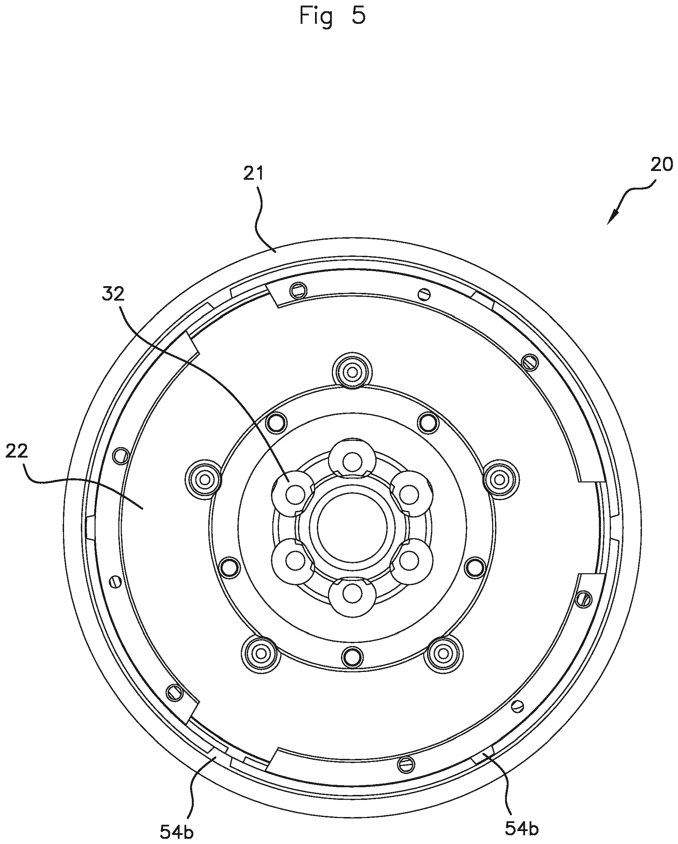

As a variant, in the embodiment illustrated in figures 5 to 8, the plate 28 of the second mass 22 comprises a main annular surface 33 and a central disc 34 mounted on the annular surface 33 and covering a central opening 35 of this annular surface 33. In particular, the central disc 34 is placed on an annular shoulder 36 of the annular surface 33, this shoulder 36 extending around the central opening 35. The central disc 34 is mounted on the annular surface 33 by rivets 37. Furthermore, the disc comprises a central hub in the shape of a cylinder of revolution inserted in a hub 29 of the first mass 21. The hub 29 of the first mass 21 and the hub 30 of the second mass 22 each have a longitudinal through-going bore. In particular, a bushing 38 is arranged between the hub 29 of the first mass 21 and the hub 30 of the second mass 22. This bushing 38 is inserted in the hub 29 of the first mass 21 by a longitudinal opening of the through-going bore arranged facing the second mass 22. This bushing 38 enables the first mass 21 to be mounted on the second mass 22. Furthermore, the central disc 34 likewise comprises openings 32 arranged in a circle around the hub.

The second mass 22 comprises five pins 39 in the shape of a cylinder of revolution arranged in a circle around the main axis 50 and extending in the cavity 26 from the plate 28 of the second mass 22 in parallel with the main axis 50.

Furthermore, for each cylindrical pin 39, a bushing 40 is inserted around and against this cylindrical pin 39.

Furthermore, in the second embodiment shown in figures 5 to 8, the first mass 21 comprises at least one friction member 41 in contact with a friction member 42 of the second mass 22. The friction members 41, 42 enable the transmission of torque between the first mass 21 and the second mass 22. The friction members 41, 42 are rings arranged, one in an annular recess 56 provided in the lip 24 of the first mass 21 and the other in a peripheral annular recess 57 in the second mass 22. Each friction members 41, 42 is formed of a material selected from spring steels (this selection being dependant on the desired hardness for the friction members 41, 42).

The dual-mass flywheel 20 likewise comprises a damping device 43 arranged in the cavity 26 of the first mass 21 between the plate 23 of the first mass 21 and the plate 28 of the second mass 22. This damping device 43 comprises a spring device and several rollers 45.

Each roller 45 is in contact with a cam surface 46 formed by the inner lateral wall 25 of the lip 24 of the first mass 21. In particular, the first mass 21 comprises a cam surface 46 for each roller 45.

More particularly, the inner lateral wall 25 of the lip of the first mass 21 comprises at least one groove 58 forming at least one cam surface 46. Each groove 58 of the lateral wall 25 axially keeps the roller 45 in place against the cam surface 46 formed by this groove. In particular, each groove 58 has a depth shallower than the radius of the roller 45 co-operating with this groove. Furthermore, the groove 58 has a width at least substantially equal to the height of the roller 45 co-operating with this groove. In order to reduce the friction between the rollers 45 and each groove 58, grease can be spread in each groove.

Furthermore, the spring device is rotationally coupled to the second mass 22 and comprises several flexible strips 47. Each flexible strip 47 is metallic. In particular, each strip 47 is formed of a material which can be selected from spring steels (this selection being dependant on the desired hardness for the strips 47). The flexibility of the strips 47 is selected as a function of desired damping performance with respect to acyclisms.

At least one strip 47 of the spring device comprises at least one bearing surface 48 for each roller 45, each roller 45 being in contact with a bearing surface 48. Therefore, each roller 45 is arranged between a bearing surface 48 and a cam surface 46 which are arranged facing each other. The spring device is adapted to be radially compressed so as to bring each bearing surface 48 closer to the main axis 50.

Each strip 47 comprises at least two hook portions 49 enabling rotation of each strip 47 about the main axis 50 with respect to the second mass 22 to be prevented and radial displacement of each strip 47 to be allowed when the spring device is radially compressed. In particular, each hook portion 49 of a strip 47 passes around a pin 39 of the second mass 22 (and more particularly passes around the bushing 40 inserted around this pin) such that this pin 39 enables rotation of the strip 47 to be prevented. In particular, each hook portion 49 passes around a pin 39 between this pin 39 and the main axis 50. Furthermore, each hook portion 49 extends radially into the cavity 26 so as to be able to slide towards the main axis 50 when the spring device is radially compressed.

The strips 47 are axially held by the plate 28 of the second mass 22 and by an annular plate 51 arranged between the plate 23 of the first mass 21 and the strips 47. The annular plate 51 is held by rivets 59 mounted on the pins 39 of the second mass 22.

More particularly, in the embodiment shown in figure 1 to 4, the device comprises two strips 47. A first flexible strip 47a extends along a theoretical closed curve. A second flexible strip 47b likewise extends along a theoretical closed curve, between the first strip 47a and the main axis 50.

The first flexible strip 47a forms each bearing surface 48 of the spring device between each hook portion 49 of this first strip 47a. In particular, the first flexible strip 47a comprises five bearing surfaces 48 and five hook portions 49.

The second strip 47b has a portion, named spring portion 52a, for each bearing surface 48 of the first flexible strip 47a. Therefore, the second strip 47b comprises five spring portions 52a. Each spring portion 52a bears against a portion, named bearing portion 53a, of the first strip 47a forming a bearing surface 48. Each spring portion 52a is arranged between each hook portion 49 of the second strip 47b. Each spring portion 52a exerts, on the bearing portion 53a of the first strip 47a in contact with this spring portion 52a, a radial force towards the lip 24 of the first mass 21 so as to keep this bearing portion 53a against the roller 45 arranged between this bearing portion 53a and the cam surface facing this bearing portion 53a.

The use of only two strips 47a, 47b to form the spring device enables the spring device to be quickly mounted on the second mass 22.

As a variant, in the embodiment shown in figures 5 to 8, the spring device comprises a plurality of flexible strips 47 which are identical to each other. In particular, the spring device comprises five flexible strips 47. Each flexible strip 47 is embedded in an adjacent flexible strip 47. In particular, each flexible strip 47 comprises a portion, named bearing portion 53b, forming a bearing surface 48 and a portion, named spring portion 52b, bearing against a surface of a bearing portion 53b of an adjacent flexible strip 47 opposite the bearing surface 48 of this bearing portion 53b. Therefore, the spring portion 52b of each strip 47 is embedded in the bearing portion 53b of an immediately adjacent strip 47. The bearing portion 53b of a strip 47 is separated from the spring portion 52b of this strip 47 by a hook portion 49 of this strip 47. Furthermore, each strip 47 comprises two other hook portions 49 forming longitudinal ends of this strip 47. Each strip 47 is thus hooked to three pins 39.

Such a spring device is simple and inexpensive to produce because each strip 47 of the spring device is identical.

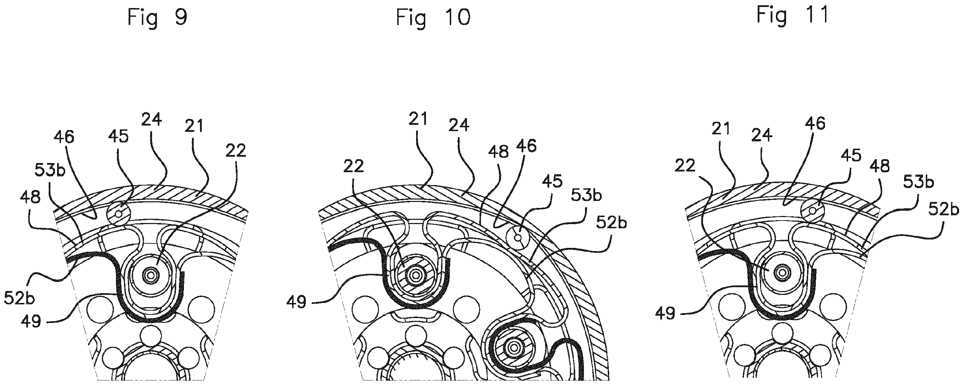

Each roller 45 is adapted to roll against and along the bearing surface 48 and the cam surface 46 against which this roller 45 is arranged. In particular, each roller 45 rolls along the bearing surface 48 and the cam surface 46 upon angular displacement of the first mass 21 with respect to the second mass 22 about the main axis 50. Furthermore, each cam surface 46 has a shape adapted to displace the roller 45 arranged against this cam surface 46 towards the main axis 50 so as to radially compress the strips 47 of the spring device (as shown in figures 9 to 11). The compression of the strips 47 enables the transmission of rotation acyclisms from the first mass 21 to the second mass 22 to be prevented.

In particular, the angular displacement of the first mass 21 with respect to the second mass 22 is defined from a position, named rest position, in which each roller 45 is arranged at a maximum distance from the main axis 50, as shown in figure 10. In particular, in the rest position, each roller 45 is placed in the centre of a cam surface 46 and in the centre of the bearing surface 48. Each cam surface 46 is symmetrical with respect to a radial plane passing through the centre of the cam surface 46. Similarly, each bearing surface 48 is symmetrical with respect to this same radial plane which likewise passes through the centre of the bearing surface 48. Each cam surface 46 has two longitudinal ends and the distance between the cam surface 46 and the main axis 50 decreases from the centre of the cam surface 46 towards its longitudinal ends. Similarly, the distance between the cam surface 46 and the bearing surface 48 decreases from the centre of the cam surface 46 towards its longitudinal ends. Each roller 45 is adapted to roll along the cam surface 46 arranged against this roller 45 between its two ends (as shown in figures 9 and 11).

The length of the cam surface 46 and the length of the bearing surface 48 are defined as a function of the desired angular displacement. Preferably, an angular displacement is selected to be between -45° and +45° from said rest position, more particularly between -26° and +26° from the rest position, as shown in figures 9 and 11.

Each cam surface 46 and each bearing surface 48 are adapted such that, in any displacement position, the tangent to the bearing surface 48 at a contact point of the bearing surface 48 with a roller 45 is in parallel with the tangent to the cam surface 46 at a contact point of the cam surface 46 with this same roller 45. Thus, each roller 45 can roll without sliding along the cam surface 46 and the bearing surface 48, between which this roller 45 is arranged.

The dual-mass flywheel 20 likewise comprises stops 54a, 54b enabling the displacement of the rollers 45 about the main axis 50 on the cam surface 46 to be limited between two positions defined by these stops 54a, 54b.

In the first embodiment shown in figures 1 to 4, each stop 54a is a piece connected to a mass of the dual-mass flywheel 20. In particular, each stop 54a comprises two shafts 55 embedded in housings provided in the plate 28 of the second mass 22.

As a variant, in the second embodiment shown in figures 5 to 8, each stop 54a is integrated in a mass 21, 22 of the dual-mass flywheel 20. Some stops 54b are integrated in the first mass 21 and other stops 54b are integrated in the second mass 22.

A dual-mass flywheel 20 in accordance with the invention thus comprises a damping device 43 adapted to transmit a torque between the first mass 21 and the second mass 22 via each roller 45 and the spring device.

In such a dual-mass flywheel 20, each roller 45 is free from the first mass 21 and from the second mass 22. In particular, each roller 45 is placed between a bearing surface 48 of the spring device and a cam surface 46 of the lip 24 of the first mass 21, without being fixed to the first mass 21 and to the second mass 22, so as to be able to roll along the bearing surface 48 and the cam surface 46. The roller 45 is thus held radially by the cam surface 46 and the bearing surface 48.

The use of free rollers 45 facilitates the production of a dual-mass flywheel 20 whilst enabling good damping performances with respect to acylcisms of the first mass 21, allowing a large angular displacement of the first mass 21 with respect to the second mass 22.

The invention can cover numerous variants and applications other than those described above. In particular, it goes without saying that, unless stated otherwise, the different structural and functional features of each of the embodiments described above do not have to be considered as being combined and/or closely and/or inextricably linked with each other, but in contrast considered as simple juxtapositions. Furthermore, the structural and/or functional features of the different embodiments described above can form, in their entirety or in part, any different juxtaposition or any different combination.

## Claims

1. Dual-mass flywheel comprising:
- a first mass (21) comprising a plate (23) from which a lip (24) protrudes so as to delimit a cavity (26) with the plate (23) of the first mass (21),
- a second mass (22) comprising a plate (28) facing the plate (23) of the first mass (21) so as to cover the cavity (26) of the first mass (21), the second mass (22) being mounted so as to rotate with respect to the first mass (21) about a main axis (50) secant with the plate (23) of the first mass (21) and the plate (28) of the second mass (22),
- a damping device (43) arranged in said cavity (26) and comprising:
∘ a spring device rotationally coupled with the second mass (22) and having at least one surface, named bearing surface (48), about the main axis (50) and facing the lip (24) of the first mass (21), the spring device being able to be radially compressed so as to bring each bearing surface (48) closer to the main axis (50),
∘ a roller (45) for each bearing surface (48) of the spring device, each roller (45) being arranged against a bearing surface (48) so as to be able to roll along this bearing surface (48) upon angular displacement of the first mass (21) with respect to the second mass (22) about the main axis (50),
**characterised in that** each roller is arranged against a bearing surface (48) and a surface, named cam surface (46), formed by the lip (24) of the first mass (21), each cam surface (46) being arranged to allow the roller (45) arranged against this cam surface (46), upon angular displacement of the first mass (21) with respect to the second mass (22) about the main axis (50), to:
- roll along this cam surface (46), and
- be displaced towards the main axis (50) so as to radially compress the spring device.

2. Dual-mass flywheel according to claim 1, **characterised in that**, in any displacement position, the tangent to the bearing surface (48) at a contact point of the bearing surface (48) with a roller (45) is in parallel with the tangent to the cam surface (46) at a contact point of the cam surface (46) with this same roller (45).

3. Dual-mass flywheel according to any one of claims 1 or 2, **characterised in that** the spring device comprises at least one flexible strip (47) forming at least one bearing surface (48) of the spring device.

4. Dual-mass flywheel according to any one of claims 1 to 3, **characterised in that** it comprises at least two stops (54a, 54b) enabling the displacement of the rollers (45) about the main axis (50) on the cam surface (46) to be limited between two positions defined by these stops (54a, 54b).

5. Dual-mass flywheel according to any one of claims 3 or 4, **characterised in that** the second mass (22) comprises at least one pin (39) extending into the cavity (26) from the plate (28) of the second mass (22), and **in that** each flexible strip (47) is held at at least one pin (39) so as to prevent rotation of each strip (47) about the main axis (50) with respect to the second mass (22) and to allow radial displacement of each strip (47) when the spring device is radially compressed.

6. Dual-mass flywheel according to claim 5, **characterised in that** each strip (47) comprises at least two hook portions (49) extending radially in the cavity (26) and each passing around a pin (39) between this pin (39) and the main axis (50).

7. Dual-mass flywheel according to claim 6, **characterised in that** the spring device comprises:
- a first closed flexible strip (47a) forming each bearing surface (48) of the spring device between each hook portion (49) of this first strip (47a),
- a second closed flexible strip (47b) arranged between the first strip (47a) and the main axis (50), this second strip (47b) having, between each hook portion (49) of this second strip (47b), a portion, named spring portion (52a), for each portion forming a bearing surface (48) of the first strip (47a), this spring portion (52a) bearing against a portion, named bearing portion (53a), of the first strip (47a) forming a bearing surface (48) and being adapted to exert, on this bearing portion (53a), a radial force towards the lip (24) of the first mass (21) so as to keep the bearing surface (48) formed by this bearing portion (53a) of the first strip (47a) against the roller (45) co-operating with this bearing surface (48).

8. Dual-mass flywheel according to claim 6, **characterised in that** the spring device comprises a plurality of identical flexible strips (47) arranged around the main axis (50) and each having:
- a portion, named bearing portion (53b), forming a bearing surface (48) of the spring device between a first hook portion (49) and a second hook portion (49) of this strip (47), and
- a portion, named spring portion (52b), between the second hook portion (49) and a third hook portion (49) of this strip (47), the spring portion (52b) bearing against a surface of the bearing portion of an adjacent strip opposite the bearing surface of this adjacent strip.

9. Dual-mass flywheel according to any one of claims 1 to 8, **characterised in that** the lip (24) of the first mass (21) comprises at least one groove having a base forming at least one cam surface (46).

10. Dual-mass flywheel according to claim 9, **characterised in that** each groove axially keeps the roller (45) in place against the cam surface (46) formed by this groove.

11. Dual-mass flywheel according to any one of claims 3 to 10, **characterised in that** each flexible strip (47) is metallic.

12. Dual-mass flywheel according to any one of claims 1 to 11, **characterised in that** the first mass (21) comprises at least one friction member (41) in contact with a friction member (42) of the second mass (22).

13. Dual-mass flywheel according to any one of claims 1 to 12, **characterised in that** the second mass (22) comprises a hub mounted on a hub (29) of the first mass (21) by a pivot joint.
